# EUROPEAN PATENT SPECIFICATION

(11) **EP 1 586 798 B1**
(45) Date of publication and mention of the grant of the patent: **16.09.2009**
(21) Application number: 05075888.7
(22) Date of filing: 15.04.2005
(51) Int. Cl.: F16J 15/00, B63H 23/32

(54) **Seal construction**
Dichtungsanordnung
Dispositif de joint d'étanchéité

(30) Priority: 15.04.2004 NL 1025959
(43) Date of publication of application: 19.10.2005
(73) Proprietor: IHC Holland IE B.V., 3361 EP Sliedrecht (NL)
(72) Inventor: Visser, Teunis, 3361 GB Sliedrecht (NL)
(74) Representative: van Westenbrugge, Andries

(56) References cited:
- EP-A- 0 335 368
- EP-A- 1 213 221
- DE-A- 3 718 411
- US-A- 4 085 941
- US-A- 5 683 278
- US-A- 5 795 198
- PATENT ABSTRACTS OF JAPAN vol. 1996, no. 03, 29 March 1996 (1996-03-29) & JP 07 310829 A (KOBELCO MARINE ENG:KK), 28 November 1995 (1995-11-28)
- PATENT ABSTRACTS OF JAPAN vol. 2000, no. 02, 29 February 2000 (2000-02-29) & JP 11 304005 A (COBELCO MARINE ENGINEERING:KK), 5 November 1999 (1999-11-05)

## Description

The invention relates to a seal construction comprising a shaft that can rotate about its longitudinal axis, a structural part that is oriented transversely to the shaft and through which the shaft is run, said structural part being liquid-tight and having a wetted surface that is defined below a nominal liquid level when in use, at least two coaxial ring seals enclosing a pressure chamber between them for sealing the shaft and the structural part with respect to one another, as well as pressurising means for feeding a fluid into the pressure chamber under excess pressure which is higher than the hydrostatic liquid pressure, which pressurising means comprise a source with a fluid under excess pressure, a throttle device between the source and the pressure chamber as well as a discharge for discharging the fluid into the surroundings.

This known seal construction forms part of the rear seal of a stem tube with a propeller shaft accommodated therein. A continuous flow of the fluid from the source must be generated in the seal construction. The excess fluid escapes underneath outer ring seal(s). Feeding of a fluid to the pressure chamber creates various advantages that are associated with an improved separation between the water outside the seal construction and the space inside it, in particular the space between the propeller shaft and the stem tube that is filled with lubricant. As a consequence of the opposing pressure generated by the fluid in the pressure chamber, first of all the load on the ring seals is appreciably reduced, as a result of which the wear thereof decreases and the life is extended. By this means it is also possible to prevent lubricant leaking from the said space to the outside and thus leading to environmental pollution.

Nevertheless the known seal construction also has disadvantages. These are associated with the fact that the throttle device used in this construction enables variable adjustment. As a consequence of this it is not guaranteed that there is always such a high excess pressure of fluid that some fluid is always able to escape at the location of the seal construction (bubbling). The consequence can then be that the fluid flow ceases for a prolonged period, as a result of which fluid and/or lubricant is still able to collect in the pressure chamber to an increasing extent. Lubricant can then still escape into the surroundings.

A seal construction of the type described before is disclosed in JP-A 7310829. According to said publication, the discharge valve is connected to a pressure tank through a separate line. The disadvantage of such separate line is that it increases cost, and also that it makes the construction relatively vulnerable.

The object of the invention is to provide a seal construction of the type before which lacks these disadvantages. Said object is achieved in that the throttle device has at least a single fixed size for the passage for the fluid, wherein pressure setting means are provided which comprise a discharge valve for discharging the fluid from the source at a level below the liquid surface for setting a pressure in the pressurising means that is associated with the hydrostatic pressure of the liquid, the discharge valve being in communication with the pressure chamber.

With the seal construction according to the invention the fixed passage of the throttle device is chosen such that a desired flow of the fluid can always be ensured. It is possible that under certain exceptional conditions, such as high waves, which, however, occur only briefly, the outflow ceases as a consequence of a high hydrostatic pressure of short duration. However, after such a high hydrostatic pressure has fallen away, the outflow is restored. The throttle device can optionally have multiple fixed passages, which are connected in parallel.

The seal construction according to the invention can be used in a wide variety of fields. The application in the rear seal of a stem tube and propeller shaft that has been described above is only one of multiple possibilities, as will be explained below. In such an application the structural part is accommodated in a passage for the propeller shaft in the ship's hull which has a wetted surface that is defined under a nominal liquid level. With this arrangement pressure setting means are provided that comprise a discharge valve for discharging the fluid from the source at a level below the liquid surface for setting a pressure in the pressurising means that is associated with the hydrostatic pressure of the liquid. The advantage of such pressure setting means is that pressure in the fluid can fluctuate in concert with fluctuations in the hydrostatic pressure in the liquid.

Preferably, the rear seal between the propeller shaft and the stem tube has at least one outer lip seal with a lip that is oriented backwards, as well as at least one inner lip seal with a lip that is oriented forwards, between which lip seals the pressure chamber is located. The space between the stem tube, the propeller shaft and the inner lip seal is filled with a liquid lubricant, in which lubricant a hydrostatic pressure prevails that is higher than the hydrostatic pressure of the water at the outer lip seal. In this context the space in which the lubricant is present is in communication with a closed lubricant reservoir that is at a higher level than the nominal liquid level, which lubricant reservoir has a fluid space that is in communication with the pressure setting means. In this case the pressure in the lubricant is also able to fluctuate. As a result the pressure drop over the ring seals can be kept within acceptable limits.

Furthermore, the discharge from the pressure chamber can open into a collection reservoir for collecting liquid and/or lubricant driven out of the pressure chamber. The collection reservoir is connected to the surrounding atmosphere by means of a throttle device with a passage with a single fixed size.

According to an important aspect of the invention, the discharge valve is in communication with the pressure chamber. The advantage is that only a single line has to be used from the source to the pressure chamber. This single line makes it possible both to feed fluid to the pressure chamber and to measure the pressure in that chamber. After all, the discharge valve opens at a certain nominal pressure in the fluid, which pressure associated with opening of the valve can be measured. In addition to this discharge valve for discharging fluid into the liquid (bubbling) and thus measuring the pressure, the pressure chamber has, as already mentioned, a discharge for discharging any fluid and/or lubricant that has leaked into the pressure chamber with another portion of the fluid flow to a collection reservoir. This discharge is preferably at a low level in the pressure chamber.

Incidentally, a separate valve for discharging fluid into the liquid (bubbling) is known per se from JP-A 7310829. However, this discharge valve is in communication with a separate line that is connected to the source and not to the pressure chamber. The disadvantage of this is that two lines are needed instead of a single line as according to the invention.

As already discussed above, the seal construction according to the invention can also be employed in fields other than the rear seal. The front seal of a propeller shaft and a stem tube surrounding the propeller shaft constitutes a further example. According to a first possibility, with this arrangement at least two successive coaxial ring seals are provided, two neighbouring ring seals of which in each case delimit a pressure chamber, which pressure chamber is connected to the source via a throttle device.

According to a further possibility, at least three successive coaxial ring seals can also be provided, of which at least two neighbouring ring seals in each case delimit a pressure chamber, one of which pressure chambers is adjacent to the space between the propeller shaft and the stem tube and the other pressure chambers are at a successively increasing distance from said space, of which pressure chambers the pressure chamber that is farthest away from the space is in communication with the surrounding atmosphere and the other pressure chambers are each connected via their own throttle device to the source, which throttle devices are connected in series such that a relatively high pressure can be generated in the pressure chamber that is adjacent to said space and a stepwise lower pressure can be set in the following pressure chambers. As a supplementary feature, a further throttle device is provided that is connected in series with the other throttle devices, which further throttle device opens into the surrounding atmosphere.

By giving the throttle devices connected in series the same throttle value, the pressure is lowered stepwise in each pressure chamber in equal steps. As a result the various seals are loaded in a virtually identical manner, which appreciably prolongs the life of the front seal. Nevertheless, if desired, different throttle values can be chosen for the various throttle devices.

In a known manner the pressure chambers can each be in communication with a respective lubricant reservoir that can be at a higher level than the associated pressure chamber, which lubricant reservoirs each have a fluid space that is in communication with the source. In the pressure chambers the pressure is then increased by the hydrostatic pressure of the lubricant column.

With the seal construction according to the invention it is extremely important that the discharge valve for discharging the fluid into the liquid functions in a reliable manner and cannot be attacked by the liquid, in particular seawater. This can be achieved in that the discharge valve comprises a non-return valve as well as a bell, in which bell the non-return valve is accommodated outside the region into which the liquid is able to penetrate into the bell. The bell can be connected at the bottom to a fluid chamber that extends upwards in the bell, in which fluid chamber the non-return valve is located. The bell has outflow holes for the fluid, which outflow holes also function as feed for admitting the liquid, in particular seawater, into the bell in the space thereof that is located outside the fluid chamber.

Furthermore, the non-return valve can have a valve seat oriented upwards as well as a valve body with a rubber surface facing the valve seat. With regard to applying the desired preloading to the valve, a mass can be provided that is accommodated in the fluid chamber such that it can be guided up and down, which mass rests on the valve body by means of a pivotable seating.

As already mentioned, the seal construction according to the invention can be employed with a wide variety of installations. In addition to the abovementioned examples relating to the rear seal and the front seal of a propeller shaft and stem tube, the shaft seal of oil-filled electric motors can also be mentioned. According to yet another possibility, the seal construction according to the invention can be employed with centrifugal pumps and rotary shafts of excavators, such as cutter suction dredgers and the like.

In these cases, for example, a concentric annular throttle channel is provided that at one end is in communication with the source for admitting the fluid and that has an outlet at the other end, whilst the pressure chamber has an inlet that is connected to the outlet of the throttle channel as well as an outlet for discharging the fluid.

To bridge large pressure differences at least three successive ring seals can be provided, two neighbouring ring seals of which in each case define a pressure chamber, as well as at least two annular throttle channels such that the pressure chambers and the throttle channels are connected alternately in series, and the fmal throttle channel in the series is provided with the discharge for the fluid. For a pressure difference of, for example, 20 bar ten annular seals can be used, such that the pressure decreases stepwise by 2 bar in each case over the ten pressure chambers defined by this means. The consequence of this is that each annular seal is only exposed to a pressure difference of 2 bar, which appreciably extends the life.

The annular seals can be lip seals, the lip of which faces the side at relatively high pressure. In addition, a wide variety of other annular seals can be used, such as slip-ring seals.

The invention will be explained in more detail below with reference to a few illustrative embodiments shown in the figures.
Figure 1 shows an axial section of a propeller shaft construction.
Figure 2 shows an example of a fixed throttle device as used in the propeller shaft construction according to Figure 1.
Figure 3 shows an alternative embodiment of the front seal of the propeller shaft construction according to Figure 1.
Figure 4 shows a discharge valve as used in the propeller shaft construction according to Figure 1.
Figure 5 shows a further embodiment in the form of a rotary shaft seal.
Figure 6 shows a section according to VI-VI in Figure 5.
Figure 7 shows a flow diagram for the embodiment in Figures 5 and 6.
Figure 8 shows a variant of the embodiment in Figures 5 and 6.
Figure 9 shows the flow diagram for Figure 8.

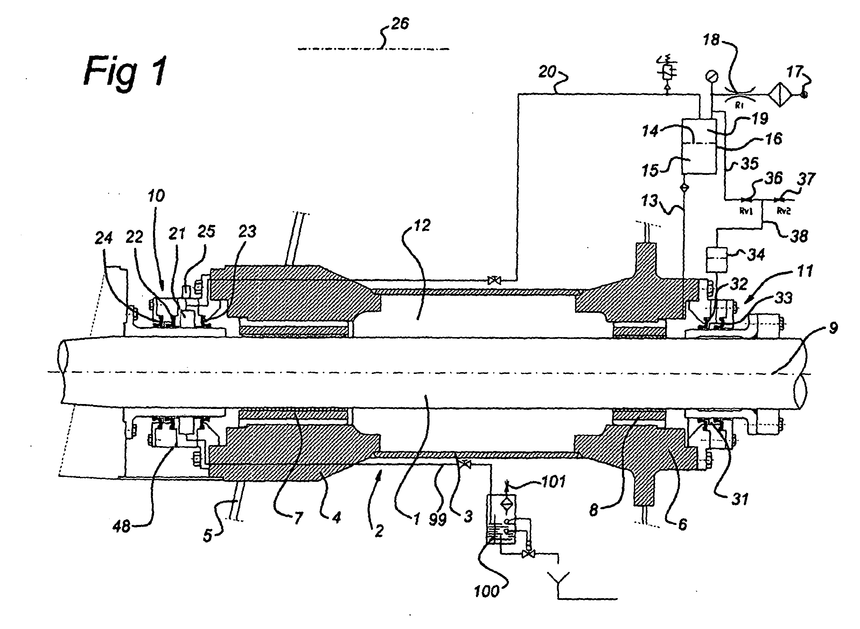

The propeller shaft construction shown in Figure 1 first of all comprises a propeller shaft 1 as well as a stem tube 2 indicated in its entirety by 2 and surrounding the propeller shaft 1. This stem tube 2 comprises a pipe part 3, a rear structural part 4 that is run through the ship's hull 5 to the outside and a front structural part 6. The rear structural part 4 supports the rear bearing 7, the front structural part 6 and the front bearing 8. The propeller shaft 1 is accommodated in these bearings 7, 8 such that it is able to turn about its axis 9. The bearings 7, 8 are plain bearings and in a known manner are made of white metal.

The rear seal indicated in its entirety by 10 is provided for sealing the propeller shaft 1 with respect to the rear structural part 4. The front seal indicated in its entirety by 11 is provided for the front structural part 6. In the space 12 delimited by the propeller shaft 1, the stem tube 2 and the seals 10, 11 a quantity of fluid lubricating oil is provided, the hydrostatic pressure of which is determined, inter alia, by the height of the lubricating oil column determined by the lubricating oil level 14 of the quantity of lubricating oil 15 in the lubricating oil reservoir 16, as well as the difference in height over the line 13 by means of which this lubricating oil reservoir 16 is connected to the space 12.

On board the vessel of which the propeller shaft construction forms part there is an on-board network 17 for compressed air that is at a pressure of between approximately 7.5 and 8.5 bar. This compressed air is connected to the space 19 above the lubricating oil level 14 in the lubricating oil reservoir 16 via a fixed throttle device 18 with a single, fixed passage, as will be explained later. The throttle device 18 has a passage such that an air flow of, for example, 25 standard litres per minute is delivered. A line 20 runs from the lubricating oil reservoir 16 to the rear seal 10. At that location the line 20 is connected to a pressure chamber 21 that is defined between the lip seals 22, 23. The lip of the front lip seal 23 faces forwards towards the space 12, whilst the lip of the other lip seal 22 is oriented backwards. The further lip seal 24 is likewise oriented backwards.

As shown in Figure 1, the line 20 is furthermore connected to the discharge valve 25. The throttle device 18 is so selected that some compressed air continuously escapes via the discharge valve 25. This means that the pressure in the pressure chamber 21 is equal to the liquid column that is located between the discharge valve 25 and the level 26 of water in which the vessel concerned is located. Because the line 20 is connected both to the pressure chamber 21 and to the discharge valve 25, it is not necessary to install a second line that runs separately to the discharge valve 25.

The fluid containing any liquid that has leaked can be discharged from the pressure chamber 21 by means of the line 99, which leads to the collection reservoir 100. This reservoir is connected to the surrounding atmosphere by means of a throttle device 101, which likewise has a passage with a single, fixed size.

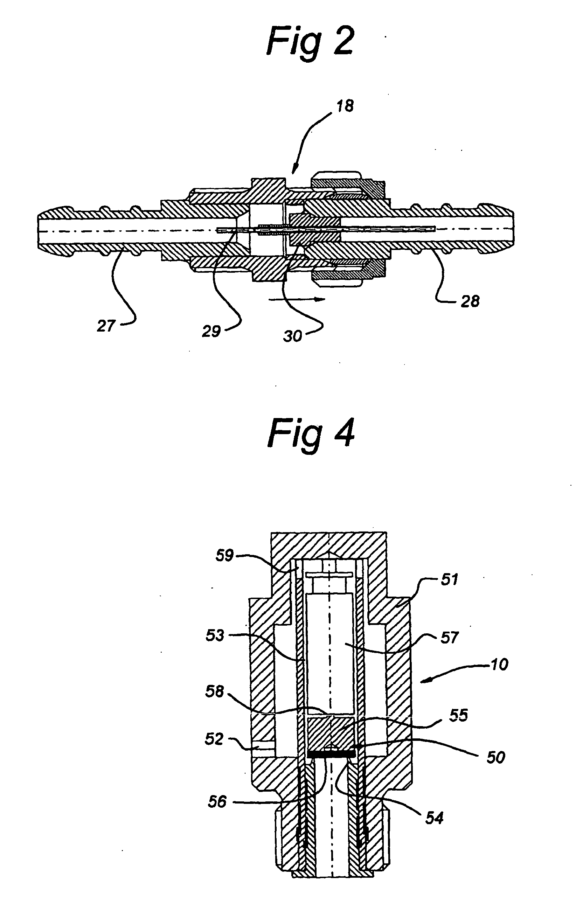

The fixed throttle device 18 according to Figure 1 is shown in more detail as an example in Figure 2. According to this example, this fixed throttle device comprises a first connector 27 located upstream, a second connector 28 located downstream, which is connected to the first, as well as a hollow needle 29 that is joined via plug 30 to the connector 28 located downstream. A specific throttle effect is obtained depending on the internal diameter and the length of the hollow needle 29; as already mentioned, according to the invention this is preferably a passage such that a specific air flow is obtained with a pressure of 7.5 to 8.5 bar on the connector 27 located upstream. As an example, a standard air flow of 25 litres per minute can be obtained.

This air flow is also used to pressurise a further pressure chamber 31 that is located between the lip seals 32 and 33. These lip seals have a lip that is oriented backwards towards the space 12 in which the lubricating oil is located. A lubricating oil reservoir 34, to which a pressure can be fed via line 35 and throttle device 36, is connected to this pressure chamber 31. This pressure is associated with the pressure as set and measured by the valve 25. This means that the pressure in the pressure chamber 31 fluctuates together with the water column up to the water level 26. Therefore, should the pressure of the lubricating oil in the space 12 increase as a consequence of an increasing draught or a high wave, the pressure in the pressure chamber 31 is also increased. The lip seal 32 is therefore not subjected to additional loading in the case of increasing pressure of the lubricating oil in the space 12 since the higher lubricating oil pressure is counteracted by the pressure of the oil in the pressure chamber 31. The life of the lip seal 32 is appreciably extended as a result.

A second throttle device 37 is coupled in series with the fixed throttle device 36. This second throttle device opens into the surroundings. The branch line 38 that leads to the lubricating oil reservoir 34 is therefore loaded with a pressure that is approximately half the pressure in the line 35 if the throttle devices 36 and 37 are identical.

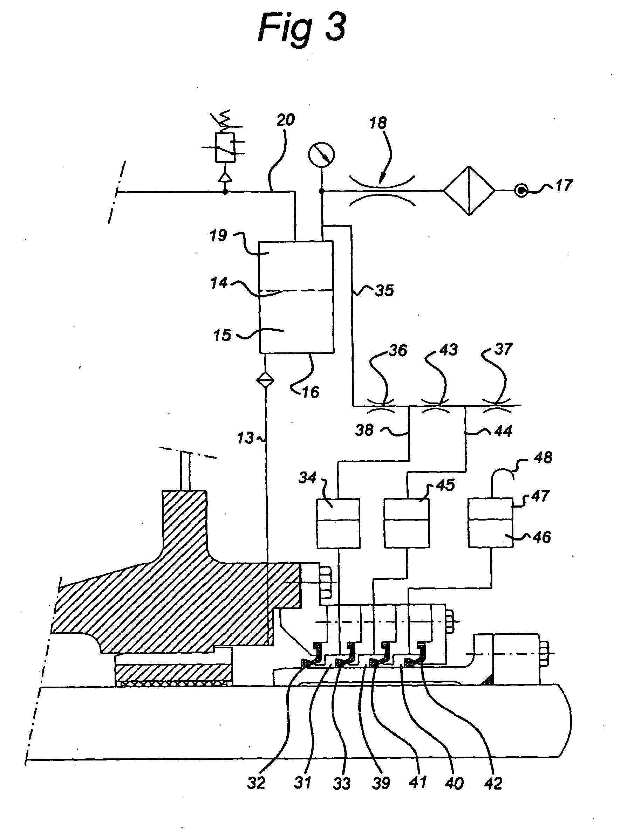

The front seal is not restricted to an embodiment with a single pressure chamber 31. As shown in the variant in Figure 3, there can also be several pressure chambers, 31, 39, 40 between four lip seals 32, 33, 41 and 42. The line 35 is now connected to three throttle devices 36, 37, 43 connected in series, the last of which opens into the surrounding atmosphere. In each case it can be a section of pipe of small internal diameter that is concerned here. The lubricating oil reservoirs 34, 45 are loaded under stepwise decreasing pressures via correspondingly positioned branch lines 38, 34, such that the pressure chambers 31, 39 also have a stepwise decreasing pressure. The pressure in the front pressure chamber 40 is the lowest, since it is exposed only to the lubricating oil column of the lubricating oil in the associated lubricating oil reservoir 47, that is in communication with the atmosphere via the line 48.

The discharge valve 25 comprises the non-return valve indicated in its entirety by 50 as well as a bell 51 provided with an opening 52 via which the fluid is discharged and seawater can possibly enter (Fig. 4). The bell 51 is closed off at the bottom by means of the fluid chamber 53 in which the valve 50 is located. The valve 50 has a valve seat 54 as well as a valve body 55, on the underside of which there is a separate, soft rubber layer 56. A mass 57 rests on the valve body 55 via the pivotable seating 58. The valve 50 is therefore held in the sealing position under the influence of gravity. Since the seating 58 is positioned centrally, a uniform pressure on the valve body is obtained.

The water can collect in the bell 51 up to a certain height around the outside of the fluid chamber 53. However, as a result of the sealing action of the valve 50 the seawater cannot reach the open communication 59 between the inside and the outside of the fluid chamber 53. Consequently, it is ensured that the valve 50 is not exposed to contaminating influences, in particular of seawater.

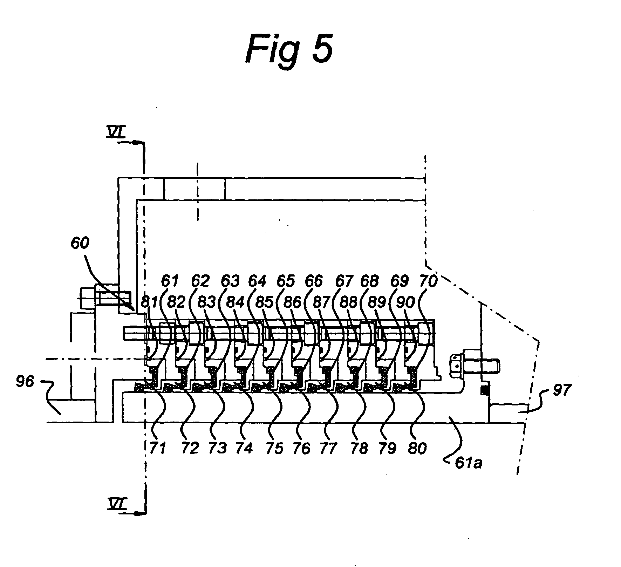

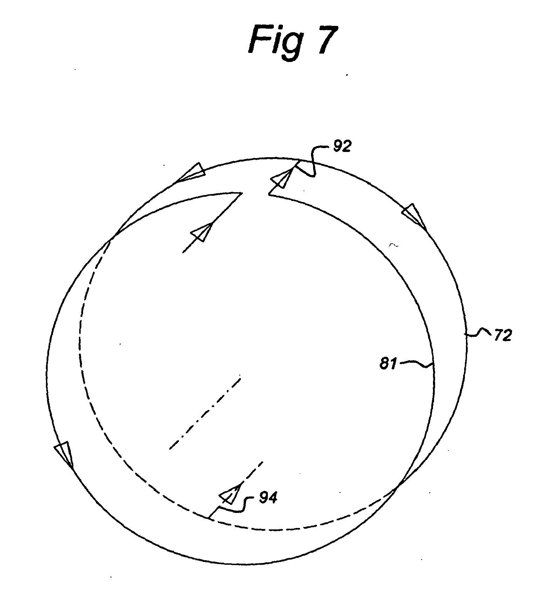

In the embodiment in Figures 5, 6 and 7 a rotary pipe seal is provided that comprises a fixed housing 60 and a bush 61a. The housing 60 is fixed to a fixed pipe 96 and the bush 61a to a pipe 97 that is able to rotate about the axis. The lip seals 60 to 70 form part of the housing 60. Between every two of these lip seals a pressure chamber 71 to 80 is provided, as well as an annular throttle device 81 to 90. A fluid under pressure, for example at a pressure of 20 bar, is contained inside the housing 60 and the bush 61 a and the pipes 96, 97.

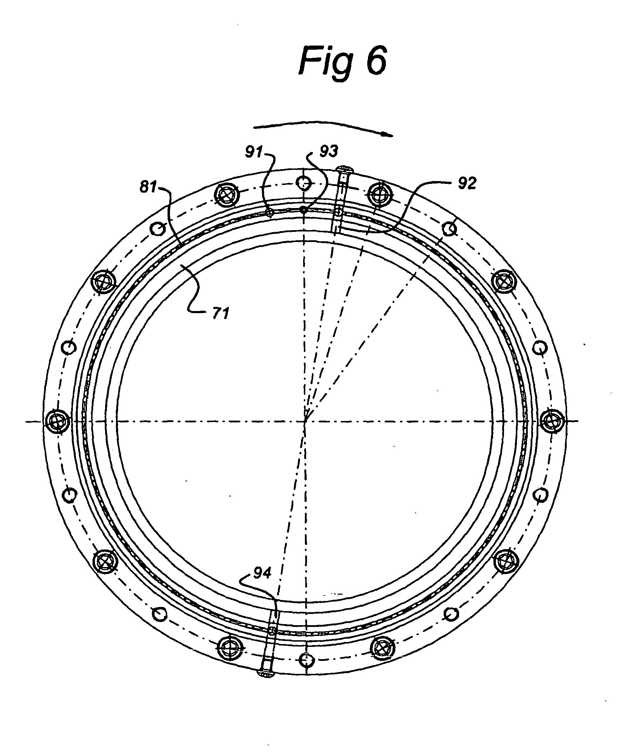

According to the invention a pressurised medium, for example water, is fed to the first throttle device 81 at the location of the feed 91 as shown in Figure 6. This water fed in is at a pressure that is approximately equal to the pressure of the medium in the housing 60 and the bush 61 a and that in the present example will thus be 20 bar. This water flows via the throttle device 81 anticlockwise in Figure 6 towards the discharge hole 92, which is separated from the feed hole 90 by the stoppers 93. This water, the pressure of which has in the interim fallen in the throttle device 81, reaches the first pressure chamber 71 via the discharge hole 92. The liquid is then fed from this first pressure chamber 71 to the second throttle device 82, specifically from the hole 94.

In this way the water runs from the feed at the first throttle channel 81 to the outlet that is in communication with the surrounding atmosphere. As a consequence of these successive and alternating throttle devices 81-90 and pressure chambers 71-79 the pressure decreases stepwise in regular steps, as a result of which all lip seals are loaded to only a very limited extent.

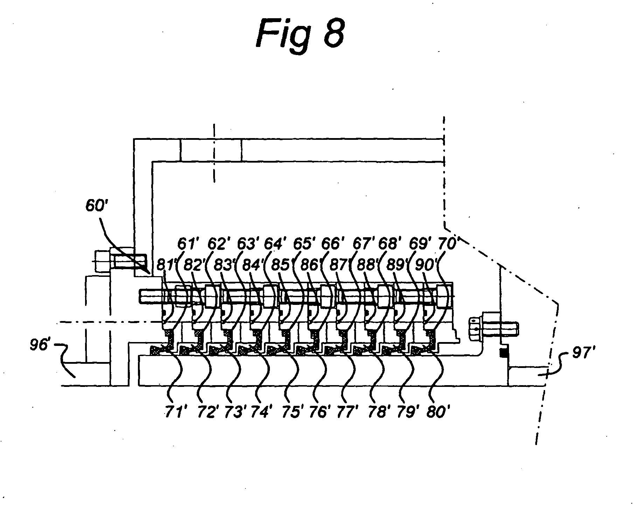

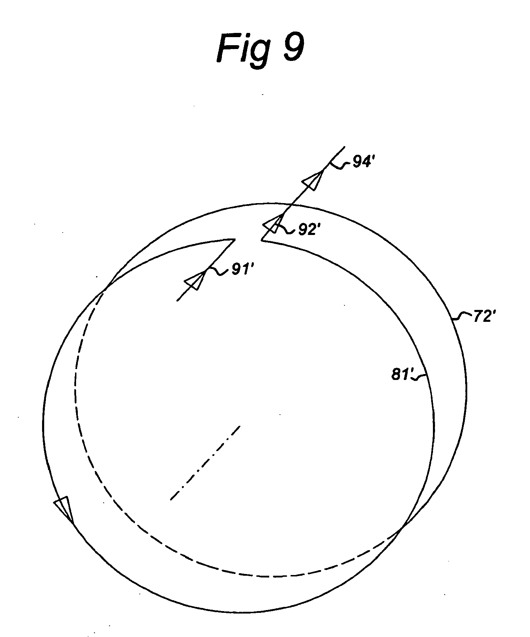

The variant in Figures 8 and 9 largely corresponds to that in Figures 5 - 7. However, the feed 92' is now connected directly in series to the discharge 94' of the pressure chambers 72' et seq. This means that in the pressure chamber 72' concerned the same pressure prevails as in the pressure chamber 72 according to Figure 5. However, the fluid is now stationary in the pressure chamber 72' and does not flow through it, as is the case with pressure chamber 72 according to Figure 5.

## Claims

1. Seal construction comprising a shaft (1) that can rotate about its longitudinal axis, a structural part (4, 5) that is oriented transversely to the shaft (1) and through which the shaft (1) is run, said structural part (4, 5) being liquid-tight and having a wetted surface that is defined below a nominal liquid level (26) when in use, at least two coaxial ring seals (22, 23) enclosing a pressure chamber (21) between them for sealing the shaft (1) and the structural part (4, 5) with respect to one another, as well as pressurising means (17-20) for feeding a fluid into the pressure chamber (21) under excess pressure which is higher than the hydrostatic liquid pressure, which pressurising means (17-20) comprise a source (17) with a fluid under excess pressure, a throttle device (18) between the source (17) and the pressure chamber (21) as well as a discharge (99) for discharging the fluid into the surroundings, **characterised in that** the throttle device (18) has at least a single fixed size for the passage for the fluid, wherein pressure setting means are provided which comprise a discharge valve (25) for discharging the fluid from the source (17) at a level below the liquid surface (26) for setting a pressure in the pressurising means (17-20) that is associated with the hydrostatic pressure of the liquid, the discharge valve (25) being in communication with the pressure chamber (21).

2. Construction according to Claim 1 for the rear seal (10) of a propeller shaft (1) and a stem tube (2) surrounding the propeller shaft (1), comprising said stern tube (2) and at least one outer lip seal (22, 24) with a lip that is oriented backwards, as well as at least one inner lip seal (23) with a lip that is oriented forwards, between which lip seals (22, 23) the pressure chamber (21) is located.

3. Construction according to Claim 1 or 2, for the rear seal (10) of a propeller shaft (1) and a stern tube (2) surrounding the propeller shaft (1), comprising said stern tube (2) and wherein the space (12) between the stem tube (2), the propeller shaft (1) and the inner lip seal (23) is filled with a liquid lubricant, in which lubricant a hydrostatic pressure prevails that is higher than the hydrostatic pressure of the water at the outer lip seal (24).

4. Construction according to Claim 3, wherein the space (12) in which the lubricant is present is in communication with a closed lubricant reservoir (16) that is at a higher level than the nominal liquid level (26), which lubricant reservoir (16) has a fluid space (19) that is in communication with the pressure setting means (25).

5. Construction according to one of the preceding claims, wherein the discharge (99) opens into a collection reservoir (100) for collecting liquid and/or lubricant driven out of the pressure chamber (21).

6. Construction according to Claim 5, wherein the collection reservoir (100) is connected to the surrounding atmosphere by means of a throttle device (101) with a passage with a single fixed size.

7. Construction according to one of Claims 1-6 for the front seal (11) of a propeller shaft (1) and a stem tube (2) surrounding the propeller shaft (1), comprising said propeller shaft (1) and said stern tube (2) and wherein at least two successive coaxial ring seals (32, 33, 42) are provided, two neighbouring ring seals of which in each case delimit a pressure chamber (31, 40), which pressure chamber (31, 40) is connected to the source via a throttle device (36, 43).

8. Construction according to Claim 7 for the front seal (11) of a propeller shaft (1) and a stem tube (2) surrounding the propeller shaft (1), wherein at least three successive coaxial ring seals (32, 33, 42) are provided, two neighbouring ring seals of which in each case delimit a pressure chamber (31, 40), one (31) of which pressure chambers is adjacent to the space (12) between the propeller shaft (1) and the stem tube (2) and the other pressure chambers (39, 40) are at a successively increasing distance from said space (12), of which pressure chambers the pressure chamber (40) that is farthest away from the space (12) is in communication with the surrounding atmosphere and the other pressure chambers (31, 40) are each connected via their own throttle device (36, 43) to the source (17), which throttle devices (36, 43) are connected in series such that a relatively high pressure can be generated in the pressure chamber (31) that is adjacent to said space (12) and a stepwise lower pressure can be set in the following pressure chambers (39, 40).

9. Construction according to Claim 8, wherein a further throttle device (37) is provided that is connected in series with the other throttle devices (36, 43), which further throttle device (37) opens into the surrounding atmosphere.

10. Construction according to Claim 7, 8 or 9, wherein the pressure chambers (31, 39, 40) are each in communication with a respective lubricant reservoir (34, 45, 47), which lubricant reservoirs (34, 45, 47) each have a fluid space that is in communication with the source (17).

11. Construction according to one of Claims 1-10, wherein the discharge valve (25) comprises a non-return valve (50) as well as a bell (51), in which bell (51) the non-return valve (50) is accommodated outside the region into which the liquid is able to penetrate into the bell (51).

12. Construction according to Claim 11, wherein the bell (51) is connected at the bottom to a fluid chamber (53) that extends upwards in the bell (51), in which fluid chamber (53) the non-return valve (50) is located and the bell (51) also has an outlet opening (52) for discharging the fluid from, and optionally admitting the fluid to, the bell (51) in the space thereof that is located outside the fluid chamber (53).

13. Construction according to Claim 12, wherein the non-return valve (50) has a valve seat (54) oriented upwards, a valve body (55) as well as a rubber surface (56) facing the valve seat (54).

14. Construction according to Claim 13, wherein a mass (57) is provided that is accommodated in the fluid chamber (53) such that it can be guided up and down, which mass (57) rests on the valve body (50) by means of a pivotable seating (58).

15. Construction according to Claim 1, wherein at least one throttle channel (81-90) is provided that at one end is in communication with the source (17) for admitting the fluid and that has an outlet (92) at the other end, the pressure chamber (21, 71-79) having an inlet that is connected to the outlet (92) of the throttle channel (81-90) as well as an outlet (94) for discharging the fluid.

16. Construction according to Claim 15, wherein at least three successive ring seals (61-70) are provided, two neighbouring ring seals of which in each case define a pressure chamber (71-80), as well as at least two annular throttle channels (81-90) such that the pressure chambers (71-80) and the throttle channels (81-90) are connected alternately in series, and the final throttle channel (90) in the series is provided with the discharge for the fluid.

17. Construction according to Claim 14 or 15, wherein the annular seals (61-70) comprise lip seals, the lip of which faces the side at relatively high pressure.

## Patentansprüche

1. Dichtungsaufbau mit einer Welle (1), die sich um ihre Längsachse drehen kann, einem tragenden Teil (4, 5), das quer zur Welle (1) orientiert und durch das die Welle (1) geführt ist, wobei das tragende Teil (4, 5) flüssigkeitsdicht ist und eine benetzte Oberfläche hat, die im Gebrauch unter einem Nennflüssigkeitspegel (26) gebildet ist, mindestens zwei koaxialen Ringdichtungen (22, 23), die eine Druckkammer (21) zwischen ihnen zum Abdichten der Welle (1) und des tragenden Teils (4, 5) im Hinblick aufeinander einschließen, sowie einer Druckbeaufschlagungseinrichtung (17-20) zum Führen eines Fluids in die Druckkammer (21) unter Überdruck, der höher als der hydrostatische Flüssigkeitsdruck ist, wobei die Druckbeaufschlagungseinrichtung (17-20) eine Quelle (17) mit einem Fluid unter Überdruck, eine Drosselvorrichtung (18) zwischen der Quelle (17) und der Druckkammer (21) sowie einen Ablaß (99) zum Ablassen des Fluids in die Umgebung aufweist, **dadurch gekennzeichnet, daß** die Drosselvorrichtung (18) mindestens eine einzelne Festgröße zum Durchgang für das Fluid hat, wobei eine Druckeinstelleinrichtung vorgesehen ist, die ein Ablaßventil (25) zum Ablassen des Fluids von der Quelle (17) auf einem Pegel unter der Flüssigkeitsoberfläche (26) zum Einstellen eines Drucks in der Druckbeaufschlagungseinrichtung (17-20) aufweist, der dem hydrostatischen Druck der Flüssigkeit zugeordnet ist, wobei das Ablaßventil (25) in Kommunikation mit der Druckkammer (21) steht.

2. Aufbau nach Anspruch 1 für die hintere Dichtung (10) einer Propellerwelle (1) und eines die Propellerwelle (1) umgebenden Stevenrohrs (2) mit dem Stevenrohr (2) und mindestens einer Außenlippendichtung (22, 24) mit einer Lippe, die rückwärts orientiert ist, sowie mindestens einer Innenlippendichtung (23) mit einer Lippe, die vorwärts orientiert ist, wobei zwischen den Lippendichtungen (22, 23) die Druckkammer (21) liegt.

3. Aufbau nach Anspruch 1 oder 2 für die hintere Dichtung (10) einer Propellerwelle (1) und eines die Propellerwelle (1) umgebenden Stevenrohrs (2) mit dem Stevenrohr (2) und wobei der Raum (12) zwischen dem Stevenrohr (2), der Propellerwelle (1) und der Innenlippendichtung (23) mit einem flüssigen Schmiermittel gefüllt ist, wobei im Schmiermittel ein hydrostatischer Druck herrscht, der höher als der hydrostatische Druck des Wassers an der Außenlippendichtung (24) ist.

4. Aufbau nach Anspruch 3, wobei der Raum (12), in dem das Schmiermittel vorhanden ist, mit einem geschlossenen Schmiermittelbehälter (16) in Kommunikation steht, der auf einem höheren Pegel als der Nennflüssigkeitspegel (26) liegt, wobei der Schmiermittelbehälter (16) einen Fluidraum (19) hat, der mit der Druckeinstelleinrichtung (25) in Kommunikation steht.

5. Aufbau nach einem der vorstehenden Ansprüche, wobei der Ablaß (99) in einen Auffangbehälter (100) zum Auffangen von Flüssigkeit und/oder Schmiermittel öffnet, das aus der Druckkammer (21) verdrängt wird.

6. Aufbau nach Anspruch 5, wobei der Auffangbehälter (100) mit der Umgebungsatmosphäre mit Hilfe einer Drosselvorrichtung (101) mit einem Durchgang mit einer einzelnen Festgröße verbunden ist.

7. Aufbau nach einem der Ansprüche 1 bis 6 für die vordere Dichtung (11) einer Propellerwelle (1) und eines die Propellerwelle (1) umgebenden Stevenrohrs (2) mit der Propellerwelle (1) und dem Stevenrohr (2) und wobei mindestens zwei aufeinanderfolgende koaxiale Ringdichtungen (32, 33, 42) vorgesehen sind, von denen zwei Nachbarringdichtungen in jedem Fall eine Druckkammer (31, 40) abgrenzen, wobei die Druckkammer (31, 40) mit der Quelle über eine Drosselvorrichtung (36, 43) verbunden ist.

8. Aufbau nach Anspruch 7 für die vordere Dichtung (11) einer Propellerwelle (1) und eines die Propellerwelle (1) umgebenden Stevenrohrs (2), wobei mindestens drei aufeinanderfolgende koaxiale Ringdichtungen (32, 33, 42) vorgesehen sind, von denen zwei Nachbarringdichtungen in jedem Fall eine Druckkammer (31, 40) abgrenzen, von den Druckkammern eine (31) benachbart zum Raum (12) zwischen der Propellerwelle (1) und dem Stevenrohr (2) liegt und die anderen Druckkammern (39, 40) in einem aufeinanderfolgend zunehmenden Abstand vom Raum (12) liegen, von den Druckkammern die Druckkammer (40), die vom Raum (12) am weitesten entfernt liegt, in Kommunikation mit der Umgebungsatmosphäre steht und die anderen Druckkammern (31, 40) jeweils über ihre eigene Drosselvorrichtung (36, 43) mit der Quelle (17) verbunden sind, wobei die Drosselvorrichtungen (36, 43) so in Reihe verbunden sind, daß ein relativ hoher Druck in der Druckkammer (31) erzeugt werden kann, die benachbart zum Raum (12) liegt, und ein schrittweise niedrigerer Druck in den folgenden Druckkammern (39, 40) eingestellt werden kann.

9. Aufbau nach Anspruch 8, wobei eine weitere Drosselvorrichtung (37) vorgesehen ist, die mit den anderen Drosselvorrichtungen (36, 43) in Reihe verbunden ist, wobei die weitere Drosselvorrichtung (37) in die Umgebungsatmosphäre öffnet.

10. Aufbau nach Anspruch 7, 8 oder 9, wobei die Druckkammern (31, 39, 40) jeweils in Kommunikation mit einem jeweiligen Schmiermittelbehälter (34, 45, 47) stehen, wobei die Schmiermittelbehälter (34, 45, 47) jeweils einen Fluidraum haben, der in Kommunikation mit der Quelle (17) steht.

11. Aufbau nach einem der Ansprüche 1 bis 10, wobei das Ablaßventil (25) ein Rückschlagventil (50) sowie eine Glocke (51) aufweist, wobei in der Glocke (51) das Rückschlagventil (50) außerhalb des Bereichs untergebracht ist, in den die Flüssigkeit in die Glocke (51) eindringen kann.

12. Aufbau nach Anspruch 11, wobei die Glocke (51) am Boden mit einer Fluidkammer (53) verbunden ist, die sich in der Glocke (51) nach oben erstreckt, wobei in der Fluidkammer (53) das Rückschlagventil (50) liegt und die Glocke (51) auch eine Auslaßöffnung (52) zum Ablassen des Fluids aus der Glocke (51) und optionalen Einlassen des Fluids in sie im Raum davon hat, der außerhalb der Fluidkammer (53) liegt.

13. Aufbau nach Anspruch 12, wobei das Rückschlagventil (50) einen nach oben orientierten Ventilsitz (54), einen Ventilkörper (55) sowie eine zum Ventilsitz (54) weisende Gummioberfläche (56) hat.

14. Aufbau nach Anspruch 13, wobei eine Masse (57) vorgesehen ist, die in der Fluidkammer (53) so untergebracht ist, daß sie nach oben und unten geführt werden kann, wobei die Masse (57) mit Hilfe einer schwenkbaren Auflage (58) auf dem Ventilkörper (50) ruht.

15. Aufbau nach Anspruch 1, wobei mindestens ein Drosselkanal (81-90) vorgesehen ist, der an einem Ende in Kommunikation mit der Quelle (17) zum Einlassen des Fluids steht und der einen Auslaß (92) am anderen Ende hat, wobei die Druckkammer (21, 71-79) einen Einlaß, der mit dem Auslaß (92) des Drosselkanals (81-90) verbunden ist, sowie einen Auslaß (94) zum Ablassen des Fluids hat.

16. Aufbau nach Anspruch 15, wobei mindestens drei aufeinanderfolgende Ringdichtungen (61-70), von denen zwei Nachbarringdichtungen in jedem Fall eine Druckkammer (71-80) bilden, sowie mindestens zwei ringförmige Drosselkanäle (81-90) so vorgesehen sind, daß die Druckkammern (71-80) und die Drosselkanäle (81-90) abwechselnd in Reihe verbunden sind und der letzte Drosselkanal (90) in der Reihe mit dem Ablaß für das Fluid versehen ist.

17. Aufbau nach Anspruch 14 oder 15, wobei die Ringdichtungen (61-70) Lippendichtungen aufweisen, deren Lippe zur Seite mit relativ hohem Druck weist.

## Revendications

1. Dispositif de joint d'étanchéité comportant un arbre (1) tournant autour de son axe longitudinal, une pièce de structure (4, 5) orientée transversalement à l'arbre (1) et traversée par l'arbre (1), cette pièce de structure (4, 5) étant étanche au liquide et ayant une surface mouillée située en dessous du niveau nominal de liquide (26) lorsque la pièce est utilisée,
au moins deux joints annulaires coaxiaux (22, 23) entourant une chambre de pression (21) pour réaliser l'étanchéité respective entre l'arbre (1) et la pièce de structure (4, 5) ainsi que des moyens de mise en pression (17-20) pour fournir du fluide à la chambre de pression (21) sous une pression supérieure à la pression hydrostatique du liquide, ces moyens de mise en pression (17-20) se composant d'une source (17) avec du fluide sous une pression excessive, un dispositif d'étranglement (18) entre la source (17) et la chambre de pression (21) ainsi qu'une sortie (99) pour évacuer le fluide vers l'environnement,
**caractérisé en ce que**
le dispositif d'étranglement (18) a au moins une seule dimension fixe pour le passage du fluide, et des moyens de réglage de pression prévus dans ce dispositif comprennent une valve d'évacuation (25) pour évacuer le fluide de la source (17) à un niveau inférieur à celui de la surface de liquide (26) pour régler dans les moyens de mise en pression (17-20) une pression associée à la pression hydrostatique du liquide, la valve d'évacuation (25) communiquant avec la chambre de pression (21).

2. Dispositif selon la revendication 1 pour le dispositif d'étanchéité arrière (10) d'un arbre d'hélice (1) et du tube d'étambot (2) entourant l'arbre d'hélice (1) comprenant le tube d'étambot (2), et au moins un joint à lèvres extérieur (22, 24) avec une lèvre orientée vers l'arrière ainsi qu'au moins un joint intérieur à lèvres (23) avec une lèvre orientée vers l'avant, la chambre de pression (21) se situant entre les lèvres d'étanchéité (22, 23).

3. Dispositif selon la revendication 1 ou 2 pour le joint arrière (10) d'un arbre d'hélice (1) et le tube d'étambot (2) entourant l'arbre d'hélice (1) comprenant le tube d'étambot (2) et dans lequel l'espace (12) entre le tube d'étambot (2) et l'arbre d'hélice (1) ainsi que le joint intérieur à lèvres (23) est rempli d'un lubrifiant liquide dont la pression hydrostatique est supérieure à la pression hydrostatique de l'eau au niveau du joint extérieur à lèvres (24).

4. Dispositif selon la revendication 3,
dans lequel
l'espace (12) dans lequel se trouve le lubrifiant communique avec un réservoir à lubrifiant (16), fermé, situé à un niveau au-dessus du niveau nominal de liquide (26), ce réservoir à lubrifiant (16) ayant un espace de fluide (19) qui communique avec le moyen de réglage de pression (25).

5. Dispositif selon les revendications précédentes,
dans lequel
la décharge (99) s'ouvre dans un réservoir collecteur (100) recueillant le liquide et/ou le lubrifiant évacué de la chambre de pression (21).

6. Dispositif selon la revendication 5,
dans lequel
le réservoir de collecte (100) est relié à l'atmosphère environnante par un dispositif d'étranglement (101) ayant un passage avec une unique dimension fixée.

7. Dispositif selon les revendications 1 à 6 pour le joint avant (11) d'un arbre d'hélice (1) et le tube d'étambot (2) entourant l'arbre d'hélice (1), comprenant cet arbre d'hélice (1) et le tube d'étambot (2), et
dans lequel
il y a au moins deux joints annulaires coaxiaux successifs (32, 33, 42), deux joints annulaires voisins et qui dans chaque cas, délimitent une chambre de pression (31, 40), cette chambre de pression (31, 40) étant reliée à la source par l'intermédiaire d'un dispositif d'étranglement (36, 43).

8. Dispositif selon la revendication 7 pour le joint avant (11) d'un arbre d'hélice (1) et d'un tube d'étambot (2) entourant l'arbre d'hélice (1), comportant au moins trois joints annulaires coaxiaux successifs (32, 33, 42), deux joints annulaires voisins délimitant dans chaque cas une chambre de pression (31, 40), l'une des chambres (31) étant adjacente à l'espace (12) entre l'arbre d'hélice (1) et le tube d'étambot (2) et l'autre des chambres à pression (39, 40) étant à une distance croissante successivement par rapport à l'espace (12) et parmi les chambres à pression, celle (40) la plus éloignée de l'espace (12) communique avec l'atmosphère environnante et les autres chambres de pression (31, 40) sont chacune reliée à la source (17) par l'intermédiaire de leur propre dispositif d'étranglement (36, 43), les dispositifs d'étranglement (36, 43) étant branchés en série pour générer une pression relativement élevée dans la chambre (31) voisine de l'espace (12) et une pression décroissante pas-à-pas se réglant dans les chambres de pression suivantes (39, 40).

9. Dispositif selon la revendication 8,
comportant un
dispositif d'étranglement (37) additionel qui est branché en série avec les autres dispositifs d'étranglement (36, 43) et cet dispositif d'étranglement (37) additionel s'ouvre à l'atmosphère environnante.

10. Dispositif selon les revendications 7, 8 ou 9,
dans lequel
les chambres de pression (31, 39, 40) communiquent chacune avec un réservoir à lubrifiant respectif (34, 45, 47), ces réservoirs à lubrifiant (34, 45, 47) ayant chacun un espace de fluide communiquant avec la source (17).

11. Dispositif selon les revendications 1 à 10,
dans lequel
la valve de décharge (25) comporte un clapet antiretour (50) ainsi qu'une cloche (51) recevant le clapet antiretour (50) à l'extérieur de la région dans laquelle le liquide peut arriver dans la cloche (51).

12. Dispositif selon la revendication 11,
dans lequel
la cloche (51) est reliée au fond d'une chambre à fluide (53) qui remonte dans la cloche (51), cette chambre à fluide (53) recevant le clapet antiretour (50) et la cloche (51) a un orifice de sortie (52) pour évacuer le fluide de la chambre et en option admettre du fluide, la cloche (51) étant dans l'espace située à l'extérieur de la chambre à fluide (53).

13. Dispositif selon la revendication 12,
dans lequel
le clapet antiretour (50) a un siège de clapet (54) orienté vers le haut, un corps de clapet (55) ainsi qu'une surface en caoutchouc (56) tournée vers le siège de clapet (54).

14. Dispositif selon la revendication 13,
dans lequel
une masse (57) est prévue dans la chambre à liquide (53) de façon à pouvoir être guidée pour monter et descendre, cette masse (57) s'appuyant sur le corps de clapet (50) par l'intermédiaire d'un siège pivotant (58).

15. Dispositif selon la revendication 1,
dans lequel
au moins un canal d'étranglement (81-90) est prévu qui à une extrémité, communique avec la source (17) pour recevoir le fluide et qui à l'autre extrémité comporte une sortie (92), la chambre de pression (21, 71-79) ayant une entrée reliée à la sortie (92) du canal d'étranglement (81-90) ainsi qu'une sortie (94) pour évacuer le fluide.

16. Dispositif selon la revendication 15,
comportant au moins
trois joints annulaires successifs (61-70), deux joints annulaires voisins définissant dans chaque cas une chambre de pression (71-80) ainsi qu'au moins deux canaux d'étranglement annulaires (81-90) de façon que les chambres de pression (71-80) et les canaux d'étranglement (81-90) soient alternativement branchés en série et que le canal final d'étranglement (90) du montage en série comporte l'évacuation de liquide.

17. Dispositif selon la revendication 14 ou 15,
dans lequel
les joints annulaires (61-70) comprennent des joints à lèvres, dont les lèvres sont tournées vers le côté à pression relativement élevée.
